# EUROPEAN PATENT SPECIFICATION

(11) **EP 2 800 948 B1**
(45) Date of publication and mention of the grant of the patent: **23.03.2022**
(21) Application number: 12864610.6
(22) Date of filing: 31.12.2012
(51) Int. Cl.: G01C 21/36, G01C 21/00, G08G 1/0969, G06F 15/16

(54) **NAVIGATION SYSTEM FOR VEHICLE AND NAVIGATION METHOD THEREOF**
NAVIGATIONSSYSTEM FÜR EIN FAHRZEUG UND NAVIGATIONSVERFAHREN DAFÜR
SYSTÈME DE NAVIGATION POUR UN VÉHICULE ET SON PROCÉDÉ DE NAVIGATION

(30) Priority: 05.01.2012 KR 20120001724
(43) Date of publication of application: 12.11.2014
(73) Proprietor: Samsung Electronics Co., Ltd., Suwon-si, Gyeonggi-do 443-742 (KR)
(72) Inventor: JIN, Young-kyu, Seoul 135-785 (KR); RHEE, Young-ho, Yongin-si, Gyeonggi-do 448-120 (KR); CHANG, Il-ku, Seongnam-si, Gyeonggi-do 463-977 (KR); JANG, Young-shil, Suwon-si, Gyeonggi-do 443-738 (KR)
(74) Representative: Grünecker Patent- und Rechtsanwälte PartG mbB
(86) International application number: PCT/KR2012/011844
(87) International publication number: WO 2013/103229

(56) References cited:
- EP-A2- 1 705 621
- EP-A2- 1 944 578
- EP-A2- 2 028 448
- KR-A- 20060 120 346
- KR-A- 20090 045 967
- KR-A- 20100 045 296
- US-A1- 2008 036 586

## Description

### Technical Field

The present invention relates generally to a navigation system for a vehicle and a navigation method thereof, and more particularly, to a navigation system for a vehicle, which can be interlocked with a user terminal apparatus, and a navigation method thereof.

### Background Art

With the development of electronic technologies, various types of electronic apparatuses are mounted and used in vehicles, such as a navigation apparatus. The navigation apparatus is an apparatus that recognizes a current location of a vehicle and guides a user to a destination using map information.

A user drives the vehicle to a destination according to the guidance of the navigation apparatus. A modern navigation apparatus provides not only basic navigation functionality but also various additional functions such as receiving Digital Multimedia Broadcasting (DMB) and reproducing a moving image and an audio file. The navigation apparatus may be purchased separately from the vehicle and may be installed in the vehicle or may be mounted on the vehicle.

### Disclosure of Invention

### Technical Problem

A user may make a call or exchange a text message using a mobile phone while operating a vehicle. However, if a user is not focusing on operating the vehicle, the user may have an accident. In practice, users frequently encounter this situation, and in particular, frequently use a mobile phone in order to inform another person at the destination about an expected time of arrival several minutes before arriving at the destination.

Accordingly, there is a demand for a method for preventing dangerous use of a mobile phone while operating a vehicle and improving user's convenience.

### Solution to Problem

Accordingly, the present invention has been made to solve the above-mentioned problems and disadvantages occurring in the prior art, and the present invention provides a navigation system for a vehicle, which is interlocked with a user terminal apparatus and improves user s safety and convenience, and a navigation method thereof.

According to an aspect of the present invention, there is provided a navigation method of a navigation system for a vehicle according to claim 1 is provided.

According to another aspect of the present invention, there is provided a navigation system for a vehicle according to claim 4.

### Advantageous Effects of Invention

According to the various exemplary embodiments described above, the user can send a desired message without directly using his/her own terminal apparatus while running the vehicle. Accordingly, user's safety and convenience can be improved.

### Brief Description of Drawings

The above and/or other features, aspects and advantages of the present invention will be more apparent from the following detailed description taken in conjunction with the accompanying drawings, in which:
FIG. 1 is a diagram illustrating an operation of a navigation system for a vehicle according to an embodiment of the present invention;
FIG. 2 is a block diagram illustrating a navigation system for a vehicle according to the present invention;
FIG. 3 is a diagram illustrating an example of a process of setting destination and a message sending function in the navigation system, according to the present invention;
FIG. 4 is a diagram illustrating an example of a User Interface (UI) screen to set a message sending condition, according to the present invention;
FIG. 5 is a block diagram illustrating a user terminal apparatus according to an embodiment of the present invention;
FIG. 6 is a flowchart illustrating a navigation method according to the present invention; and
FIG. 7 is a diagram illustrating a timing chart for an interlocking process between a navigation system and a user terminal apparatus according to an embodiment of the present invention.

### Mode for the Invention

Hereinafter, the present invention will be described in greater detail with reference to the accompanying drawings, in which aspects of the present invention are illustrated.

In the following description, same reference numerals are used for the same elements throughout the drawings. Well-known functions or elements may be omitted to avoid obscuring the description with unnecessary detail.

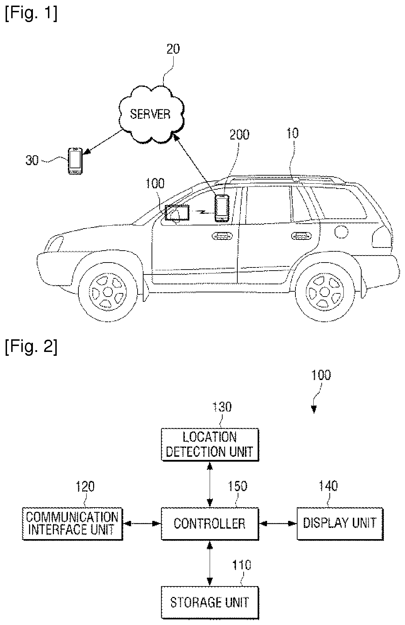

FIG. 1 is a diagram illustrating an operation of a navigation system for a vehicle according to an embodiment of the present invention. Referring to FIG. 1, a navigation system 100 is mounted in a vehicle 10. The navigation system 100 may be manufactured as a separate apparatus and may be connected to an inside of the vehicle 10 or may be built-in to the vehicle 10.

The navigation system 100 provides navigation to a destination selected by a user. If it is determined that a pre-selected message sending condition is satisfied while the user runs the vehicle 10, the navigation system 100 processes a message to be forwarded to a receiver.

Specifically, the navigation system 100 is connected to a user terminal apparatus 200 carried by a vehicle user in a wired or wireless manner. Accordingly, when the message sending condition is satisfied, the navigation system 100 sends a message to the user terminal apparatus 200 of the vehicle user. The user terminal apparatus 200 sends the message to a sever 20 so that the message can be sent to a receiver terminal apparatus 30. The message sending condition may be set to various values such as a remaining distance to a destination, an estimated time required to arrive, and an estimated time of arrival according to embodiments of the present invention.

The receiver information may be a phone number and the message may be a Short Message Service (SMS) message or a Multimedia Message Service (MMS) message. Additionally, the receiver information may be an e-mail address and the message may be an e-mail. The receiver information is not limited to a single receiver and the message may be sent to a plurality of receivers simultaneously.

For example, when destination is set to a hotel, the navigation system 100 may send an SMS message requesting the hotel lobby to prepare to perform a check-in process ten minutes before arriving at the hotel. Accordingly, the hotel can get ready to perform a check-in process in advance and thus improving user convenience.

Alternatively, even when a destination is not selected, the navigation system 100 may send a message to inform a receiver of a current location on a predetermined time basis. If a condition is set to send a message every hour, the navigation system 100 determines arrival of a pre-set time based on a time provided from a timer included in the navigation system 100 or a Global Positioning System (GPS) satellite.

When the pre-set time arrives, the navigation system 100 automatically generates a message including information on a current location of the navigation system 100 and sends the message to the user terminal apparatus 200. The user terminal apparatus 200 sends pre-selected receiver information and the message to the server 20. The receiver information may be already stored in the navigation system 100 or the user terminal apparatus 200.

In FIG. 1, the navigation system 100 is connected to the user terminal apparatus 200 and sends the message to the receiver terminal apparatus 30 through the user terminal apparatus 200 and the server 20. However, when the navigation system 100 includes a communication module, the navigation system 100 may send the message to the server 20 directly.

The navigation system 100 or the user terminal apparatus 200 may output a User Interface (UI) or a voice message requesting user confirmation prior to sending the message, and may send the message when user confirmation is received in response to the UI or the voice message.

FIG. 2 is a block diagram illustrating a navigation system 100 according to an embodiment. Referring to FIG. 2, a navigation system 100 includes a storage unit 110, a communication interface unit 120, a location detection unit 130, a display unit 140, and a controller 150.

The storage unit 110 stores map information, navigation firmware, and other applications and data. The storage unit 110 may store destination information, receiver information, a message sending condition, and a message text, which are input by a user in the process of executing a navigation function.

The location detection unit 130 detects a location of the navigation system 100. Specifically, the location detection unit 130 includes a GPS module and detects a location using a GPS signal. The GPS module receives signals transmitted from a plurality of GPS satellites and calculates a distance between the satellite and the navigation system 100 using a time difference between a transmitting time and a receiving time. The GPS module calculates a current location of the navigation system 100 using a calculation method such as triangulation in consideration of the distance between the navigation system 100 and each of the plurality of satellites and the location of the satellite. The navigation system 100 is mounted and used in a vehicle, and therefore the location of the navigation system 100 corresponds to the location of the vehicle.

The controller 150 searches for a path to a destination using the location detected by the location detection unit 130 and the map information stored in the storage unit 110. The controller 150 configures a navigation screen indicating the searched path and displays the navigation screen through the display unit 140. The navigation screen may be displayed as a plane image or a 3-dimensional image according to a specification of the navigation system 100. The controller 150 may include a rendering module (not shown) to configure the navigation screen.

The communication interface unit 120 is connected to the user terminal apparatus 200 in a wired or wireless manner and communicates with the user terminal apparatus 200. Specifically, the communication interface unit 120 communicates with the user terminal apparatus 200 using a USB standard, Bluetooth(TM), Wi-Fi, and other well-known wired or wireless protocols.

If a message sending condition is satisfied while a user drives a vehicle to a destination, the controller 150 controls the communication interface unit 120 to send a message to be forwarded to receiver information. Although the communication interface unit 120 may directly send the message to a receiver using the receiver information according to an embodiment, the communication interface unit 120 may send the message through the user terminal apparatus 200 as in FIG. 2.

If a navigation function is selected, the controller 150 controls the display unit 140 to display a UI screen to receive input of a variety of information necessary for executing the navigation function. The user may select a destination through the UI screen, and may select a preferred path when there is a plurality of paths to the destination.

The user sets a message sending function through the UI screen. That is, a menu to set whether to send a message when a message sending condition is satisfied as described above may be provided on the UI screen. The user sets the message sending function by selecting the corresponding menu. If the message sending function is set, the user sets a message sending condition, receiver information, and a message text.

The message sending condition may be set based on distance information or may be set based on an estimated time of arrival or an estimated time required to arrive. A method for setting the message sending condition is explained in detail below.

If the set message sending condition is satisfied, the controller 150 sends the set receiver information and the message to the user terminal apparatus 200 through the communication interface unit 120. Accordingly, the user terminal apparatus 200 sends the message to the server 20 and the server 20 sends the message to the receiver terminal apparatus 30.

All of the destination, the message sending condition, the receiver information, and the message sending function are set by the user on the navigation system 100 in the above-embodiment. In explanatory examples not falling within the scope of the invention, some information may not be input.

That is, according to an example not falling within the scope of the invention, the navigation system 100 may directly search for receiver information without receiving input of the receiver information separately. If a separate communication module is included in the navigation system 100, the controller 150 may access a web using the network communication module and search for receiver information such as a phone number or an email address corresponding to input destination information. The navigation system 100 may send the message to the receiver through the user terminal apparatus 200 or directly using the searched receiver information.

According to still another example not falling within the scope of the invention, the storage unit 110 of the navigation system 100 may store a receiver information database. If the message sending function is set, the controller 150 may search for receiver information corresponding to a destination from the receiver information database. Accordingly, the controller 150 may provide the searched receiver information and the message to the user terminal apparatus 200.

According to still another example not falling within the scope of the invention, the navigation system 100 may search for receiver information using the user terminal apparatus 200 without receiving input of the receiver information separately. That is, the controller 150 may transmit destination information to the user terminal apparatus 200. The user terminal apparatus 200 may search for a phone number or a mail address corresponding to the destination information by executing an application which is provided to search for receiver information. After that, when the message sending condition is satisfied, the controller 150 sends the message to be forwarded and a command to the user terminal apparatus 200, and the user terminal apparatus 200 may send the message using the receiver information searched by itself.

According to still another example not falling within the scope of the invention, the navigation system 100 may generate a message by itself. That is, when destination information and a message sending condition are input and the message sending function is set, the controller 150 may automatically generate a message to be forwarded by combining the input message sending condition with a pre-stored default message. For example, when an estimated time required to arrive is set to "N" in the message sending condition, the navigation system 100 may automatically generate a message, "You will arrive after N minutes", by combining the message sending condition with a text defined as default. The navigation system 100 may automatically generate a message when the user does not input a message text. According to another embodiment of the present invention, the message may be generated by the user terminal apparatus 200.

According to still another example not falling within the scope of the invention, when the communication interface unit 120 is able to communicate with the external server 20, the controller 150 controls the communication interface unit 120 to send the message and the receiver information to the server 20 directly.

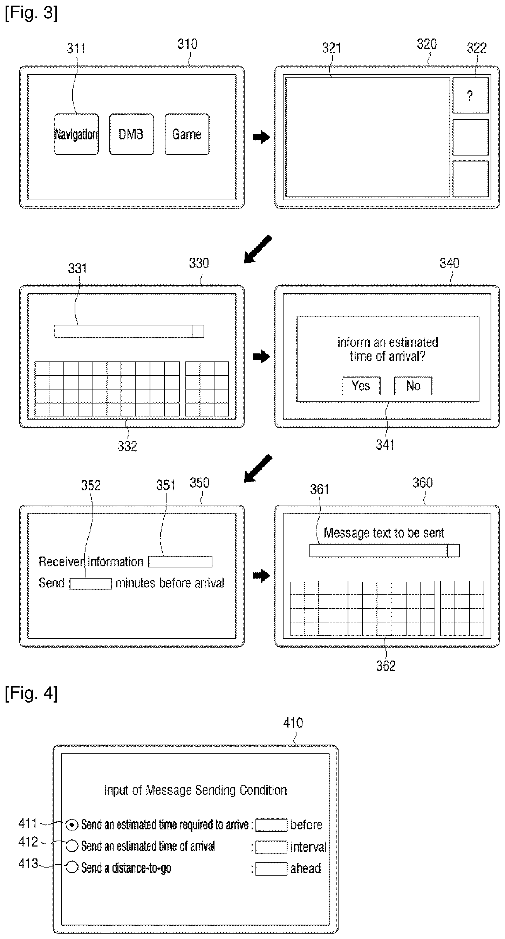

FIG. 3 is a diagram illustrating an example not falling within the scope of the invention of a method for setting a message sending function in the navigation system 100.

Referring to FIG. 3, when the navigation system 100 is turned on, the navigation system 100 displays a background screen 310. A navigation menu 311 may be displayed on the background screen 310 along with other menus.

If the user selects the navigation menu 311, a navigation execution screen 320 is displayed. A menu 322 to select destination may be displayed on the navigation execution screen 320. If the user selects the menu 322, a screen 330 to input destination is displayed. In this description, the screen to input a destination is referred to as a first UI screen 330.

The first UI screen 330 includes a soft keyboard 332 to input a text and a display area 331 to display the text input through the soft keyboard 332. The user may select destination by manipulating the soft keyboard 332.

If the destination is selected, a second UI screen 340 including a menu 341 to send a message may be displayed. The menu 341 includes a message to ask whether to select a message sending function and buttons to accept or refuse function setting.

If the function setting is selected on the menu 341, a third UI screen 350 including an area 351 to input receiver information and an area 352 to input a message sending condition is displayed.

If receiver information and a message sending condition are input on the third UI screen 350, a fourth UI screen 360 to receive input of a message text to be sent is displayed. The fourth UI screen 360 displays a soft keyboard 362 and a text display area 361 like the first UI screen 330.

As described above, various information such as destination, message sending function setting, receiver information, a message sending condition, and a message text is input through at least one UI screen. The configuration and number of the UI screen and the order of inputting the information may be changed variously.

In FIG. 3, an estimated time required to arrive is set as the message sending condition. The navigation system 100 may determine whether the message sending condition is satisfied or not based on an estimated time required to arrive at destination.

That is, when the message sending condition is set to "N" minutes before arriving at destination, the controller 150 calculates an estimated time required to arrive or an estimated time of arrival in consideration of a moving speed and a location of the vehicle, a remaining distance to the destination, and a traffic condition. The controller 150 compares the calculated time information and the message sending condition, and, when the message sending condition is satisfied, sends the message.

As described above, the message sending condition may be differently set.

FIG. 4 is a diagram illustrating an example of a UI screen to set various message sending conditions. Referring to FIG. 4, the message sending condition may be set to an estimated time required to arrive, an estimated time of arrival, and a remaining distance.

A first menu 411 on a UI screen 410 is to set an estimated time required to arrive, a second menu 412 is to set an estimated time of arrival, and a third menu 413 is to set a remaining distance.

If the user inputs " 10 minutes" on the menu 411 to set an estimated time required to arrive, the controller 150 sends a message 10 minutes before arriving at destination. If the user directly inputs a message to be sent, the message is sent as is, and, when the user does not input a message, a message is automatically generated, for example by adding an expression "10 minutes before" to a default message and is sent.

If the menu 412 to send an estimated time of arrival is selected, the user may input a time interval on a right area of the menu 412. If the user inputs "one hour", the controller 150 may send a message including an estimated time of arrival every hour from departure until arrival. According to another embodiment of the present invention, the user may not input a time interval and the message may be sent at a predetermined default time interval.

Alternatively, when the menu 413 to set a remaining distance is selected, the user may input a remaining distance on a right area of the menu 413. For example, when the user inputs "500 m", the controller 150 may send a message 500 meters ahead of reaching a destination.

In FIG. 4, the user may select one condition from among the plurality of message sending conditions that are supported.

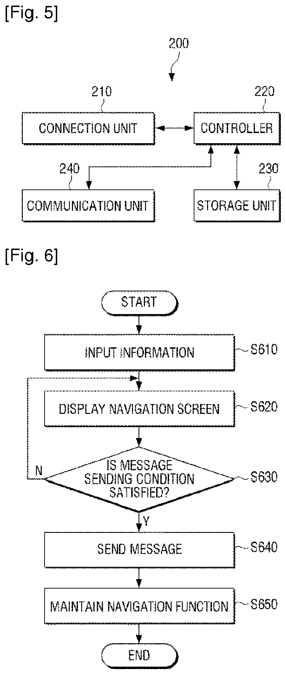

FIG. 5 is a block diagram illustrating a user terminal apparatus 200 which is connected to a navigation system 100 and sends a message. Referring to FIG. 5, the user terminal apparatus 200 includes a connection unit 210, a controller 220, a storage unit 230, and a communication unit 240.

The connection unit 210 is connected to the navigation system 100 through a wired or wireless interface. The storage unit 230 stores various applications, operating systems, and other data. The communication unit 240 communicates with a server 200.

The controller 220 may execute an application stored in the storage unit 230 when the user terminal apparatus 200 is connected to the navigation system 100 or receives a message from the navigation system 100. The application may be an application for sending an SMS message or an MMS message or emailing.

The controller 220 sends a message and receiver information which are sent from the navigation system 100 to the server 20 using the executed application. The message and the receiver information may be sent in a form of a text message such as an SMS message or an MMS message, or in an email format.

According to another example not falling within the scope of the invention, the controller 220 may receive destination information from the navigation system 100 and may search for receiver information corresponding to the destination. The search may be performed over the web or may be performed in a database stored in the storage unit 230. The controller 220 may store the searched receiver information, and, when receiving a message from the navigation system 100, may send the message and the receiver information to the server 200 so that the message can be sent to the receiver information. According to another example, the controller 220 may directly combine and configure a message text, as described above.

The user terminal apparatus 200 may provide a UI or output a voice message to receive user's confirmation on whether to send the message or not prior to sending the message. If the user confirms that the message is sent through touch or voice, the message is directly sent.

The user terminal apparatus 200 of FIG. 5 may be implemented by various apparatuses, such as a mobile phone, a Personal Digital Assistant (PDA), a notebook computer, and a tablet PC. The user terminal apparatus 200 of FIG. 5 may be connected to a navigation system mounted in a vehicle, as well as a main unit or a control board mounted in a vehicle to transmit various information regarding the vehicle to the receiver information. For example, a variety of information such as abnormality of a vehicle, a current speed, a location, a current state of remaining oil may be transmitted to pre-set receiver information. Additionally, the user terminal apparatus 200 of FIG. 5 may be modified to be used in various types of transport systems such as a ship or a motorcycle, besides a vehicle.

FIG. 6 is a flowchart illustrating a navigation method according to the present invention. Referring to FIG. 6, when a variety of information necessary for navigation is input in Step 610, a navigation screen is displayed by executing a navigation function in Step 620. The input information may be about at least one of destination, whether a message sending function is set or not, a message sending condition, a number of times a message is sent, and a message text to be sent.

If a message sending condition is satisfied while the user runs the vehicle according to the navigation screen in Step 630, a message is sent in Step 640. The message is sent to the receiver through the user terminal apparatus. In an example not falling within the scope of the invention, the message may be sent to the receiver through the user terminal apparatus and the server connected to the navigation system, and, when the navigation system includes a communication function, the message may be sent to the receiver directly through the server by the navigation system. The message may be sent a number of times set by the user or a number of times set as default.

If a distance remains to go to the destination after the message is sent, the navigation function is maintained and the navigation is performed continuously in Step 650.

If the message sending condition is an estimated time required to arrive as described above, the message may be sent when a time remaining until arrival is identical to the set time required to arrive.

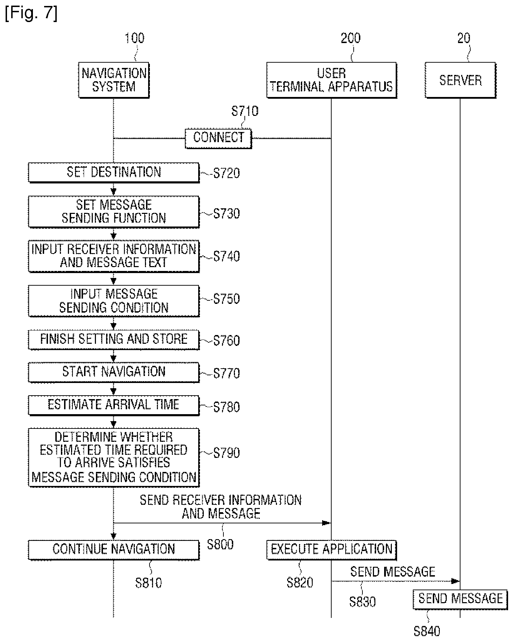

FIG. 7 is a diagram illustrating an interlocking operation among the navigation system 100, the user terminal apparatus 200, and the server 20 when an estimated time required to arrive is set as a message sending condition.

Referring to FIG. 7, the navigation system 100 and the user terminal apparatus 200 are connected to each other in Step 710. The navigation system 100 and the user terminal apparatus 200 may be connected to each other through various wired or wireless interfaces such as a USB, Wi-Fi, and Bluetooth(TM).

When the user executes a navigation function and sets destination in Step 720, a UI screen is displayed. The user sets a message sending function using the UI screen in Step 730, and inputs receiver information, a message text, and a message sending condition in Step 740 and S750. The inputting order or inputting way of the information may be changed variously.

If the input of the information is completed, the set information is stored in Step 760.

The navigation system starts navigation using the set destination information in Step 770. An arrival time is calculated during navigation in Step 780 and it is determined whether an estimated time required to arrive satisfies the message sending condition in Step 790.

If the message sending condition is satisfied, the navigation system 100 sends the receiver information and the message to the user terminal apparatus 200 in Step 800. The user terminal apparatus 200 executes an application for sending a message in Step 820 and sends the receiver information, sender information, and the message text to the sever in Step 830. The server 20 sends a message including the message text to a receiver terminal apparatus using the receiver information in Step 840.

The navigation system 100 continues the navigation when a distance remains to go to the destination after sending the message in Step 810.

As described above, the navigation system 100 may be connected to the user terminal apparatus 200 and may send the message to a desired receiver at a time desired by the user. Accordingly, since it is not necessary for the user to manipulate the user terminal apparatus while driving, user's safety is improved.

In the above embodiments, the navigation system 100 includes a touch screen and the user inputs the variety of information and selects the menu in a touch input method

Alternatively, the input of the variety of information and the selection of the menu may be achieved using various buttons on the navigation system 100 or inputting means connected to the navigation system 100.

The navigation system 100 described above may be implemented in a main unit for a vehicle or a control system for a vehicle which has a navigation function.

A program to perform the method may be stored in various types of recording media and may be used.

Specifically, a code to perform the above-described methods may be stored in various types of recording media readable by a terminal apparatus, such as a Random Access Memory (RAM), a flash memory, a Read Only Memory (ROM), an Erasable Programmable ROM (EPROM), an Electronically Erasable And Programmable ROM (EEPROM), a register, a hard disk, a removable disk, a memory card, a USB memory, and a CD-ROM.

While the present invention has been shown and described with reference to various embodiments thereof, various changes in form and detail may be made without departing from the scope of the present invention, defined by the appended claims.

## Claims

1. A navigation method of a navigation system (100) for a vehicle, the navigation method comprising:
when a navigation function is selected, inputting destination and receiver information;
displaying a navigation screen to guide a user to the destination using the input information; and
when a predetermined message sending condition is satisfied while operating the vehicle to the destination, displaying a user interface, UI, for receiving a user confirmation for requesting to sending a message,
in response to the user confirmation for sending the message being input, sending the message to be forwarded to receiver terminal apparatus (30) corresponding to the receiver information,
wherein sending the message to be forwarded comprises sending the receiver information and the message to a user terminal apparatus (200) which is connected to the navigation system (100) through an interface, and the user terminal apparatus (200) forwarding the message to the receiver terminal apparatus (30) corresponding to the receiver information, and
wherein inputting the destination and receiver information comprises:
displaying a background screen comprising a navigation menu to execute the navigation function;
when the navigation menu is selected, displaying a Ul screen to receive input of the destination information, message sending function setting, the receiver information, a message text, and a message sending condition; and
storing information input through the UI screen.

2. The navigation method as claimed in claim 1, wherein sending the message to be forwarded further comprises:
when the message sending condition is satisfied, automatically generating a text of a message to be forwarded to the receiver terminal apparatus (30) corresponding to the receiver information; and
sending the message of the generated text and the receiver information to the user terminal apparatus (200).

3. The navigation method as claimed in claim 1, further comprising estimating an arrival time using a moving speed of the vehicle and a path to the destination,
wherein the message sending condition is an estimated time required to arrive at the destination.

4. A navigation system (100) for a vehicle, the navigation system (100) comprising:
a storage unit (110) which stores map information;
a location detection unit (130) which detects a location of the navigation system (100);
a controller (150) which searches for a path to a destination using the map information and the detected location, and generates a navigation screen;
a display unit (140) which displays the navigation screen; and
a communication interface unit (120) through which a message is sent,
wherein the controller (150) controls the display unit (140) to display a UI screen to receive input of the destination information, message sending function setting, the receiver information, a message text, and the message sending condition,
wherein the controller (150) stores information input through the UI screen in the storage unit (110),
wherein, when a message sending condition is satisfied while a user operates the vehicle to the destination, a user interface, UI, for receiving a user confirmation for requesting to sending a message is displayed,
in response to the user confirmation for sending the message being input, the controller (150) controls the communication interface unit (120) to send the message to be forwarded to a receiver terminal apparatus (30) corresponding to pre-input receiver information,
wherein the communication interface unit (120) is connected to a user terminal apparatus (200) through an interface,
wherein the controller (150) sends the receiver information and the message to the user terminal apparatus (200), and the user terminal apparatus (200) forwards the message to the receiver terminal apparatus (30) corresponding to the receiver information.

5. The navigation system (100) as claimed in claim 4,
wherein, when the message sending condition is satisfied, the controller (150) automatically generates a text of a message to be forwarded to the receiver terminal apparatus (30) corresponding to the receiver information and controls the communication interface unit (120) to send the message of the generated text and the receiver information to the user terminal apparatus (200).

6. The navigation system (100) as claimed in claim 4, wherein the controller (150) estimates an arrival time using a moving speed of the vehicle and a path to the destination, and determines whether the message sending condition is satisfied,
wherein the message sending condition is an estimated time required to arrive at the destination.

## Patentansprüche

1. Navigationsverfahren eines Navigationssystems (100) für ein Fahrzeug, wobei das Navigationsverfahren umfasst:
wenn eine Navigationsfunktion ausgewählt ist, Eingeben von Zielort- und Empfängerinformationen;
Anzeigen eines Navigationsbildschirms, um einen Benutzer unter Verwendung der eingegebenen Informationen zu dem Zielort zu leiten; und,
wenn eine vorbestimmte Nachrichtensendebedingung während des Betriebs des Fahrzeugs zum Zielort erfüllt ist, Anzeigen einer Benutzerschnittstelle (UI) zum Empfangen einer Benutzerbestätigung für die Anforderung zum Senden einer Nachricht,
als Reaktion auf die Eingabe der Benutzerbestätigung für das Senden der Nachricht, Senden der weiterzuleitenden Nachricht an das Empfängerendgerät (30) entsprechend den Empfängerinformationen,
wobei das Senden der weiterzuleitenden Nachricht das Senden der Empfängerinformationen und der Nachricht an ein Benutzerendgerät (200) umfasst, das über eine Schnittstelle mit dem Navigationssystem (100) verbunden ist, und das Benutzerendgerät (200) die Nachricht an das Empfängerendgerät (30) entsprechend den Empfängerinformationen weiterleitet, und
das Eingeben der Zielort- und Empfängerinformationen umfasst:
Anzeigen eines Hintergrundbildschirms mit einem Navigationsmenü zur Ausführung der Navigationsfunktion;
wenn das Navigationsmenü ausgewählt ist, Anzeigen eines UI-Bildschirms, um die Eingabe der Zielortinformationen, der Einstellung der Nachrichtensendefunktion, der Empfängerinformationen, eines Nachrichtentextes und einer Nachrichtensendebedingung zu empfangen; und
Speichern von Informationen, die über den UI-Bildschirm eingegeben wurden.

2. Navigationsverfahren nach Anspruch 1, bei dem das Senden der weiterzuleitenden Nachricht weiterhin umfasst:
wenn die Nachrichtensendebedingung erfüllt ist, automatisches Erzeugen eines Textes einer Nachricht, die an das Empfängerendgerät (30) weiterzuleiten ist, entsprechend den Empfängerinformationen; und
Senden der Nachricht mit dem erzeugten Text und den Empfängerinformationen an das Benutzerendgerät (200).

3. Navigationsverfahren nach Anspruch 1 weiterhin umfassend das Schätzen einer Ankunftszeit unter Verwendung einer Fahrgeschwindigkeit des Fahrzeugs und des Weges zu dem Zielort,
wobei die Nachrichtensendebedingung eine geschätzte Zeit ist, die benötigt wird, um an dem Zielort anzukommen.

4. Navigationssystem (100) für ein Fahrzeug, wobei das Navigationssystem (100) umfasst:
eine Speichereinheit (110), die Karteninformationen speichert;
eine Standorterfassungseinheit (130), die einen Standort des Navigationssystems (100) erfasst;
eine Steuereinheit (150), die unter Verwendung der Karteninformationen und des erfassten Standorts nach einem Weg zu einem Zielort sucht und einen Navigationsbildschirm erzeugt;
eine Anzeigeeinheit (140), die den Navigationsbildschirm anzeigt; und
eine Kommunikationsschnittstelleneinheit (120), über die eine Nachricht gesendet wird,
wobei die Steuereinheit (150) die Anzeigeeinheit (140) steuert, um einen Ul-Bildschirm anzuzeigen, um Eingaben der Zielortinformationen, der Einstellung der Nachrichtensendefunktion, der Empfängerinformationen, eines Nachrichtentextes und der Nachrichtensendebedingung zu empfangen,
wobei die Steuereinheit (150) die über den UI-Bildschirm eingegebenen Informationen in der Speichereinheit (110) speichert,
wenn eine Nachrichtensendebedingung erfüllt ist, während ein Benutzer das Fahrzeug zu dem Zielort steuert, eine Benutzerschnittstelle (UI) zum Empfangen einer Benutzerbestätigung für die Aufforderung zum Senden einer Nachricht angezeigt wird,
als Reaktion auf die Eingabe einer Benutzerbestätigung für das Senden der Nachricht die Steuereinheit (150) die Kommunikationsschnittstelleneinheit (120) steuert, um die weiterzuleitende Nachricht an ein Empfängerendgerät (30) entsprechend den vorher eingegebenen Empfängerinformationen zu senden,
die Kommunikationsschnittstelleneinheit (120) über eine Schnittstelle mit einem Benutzerendgerät (200) verbunden ist und
die Steuereinheit (150) die Empfängerinformationen und die Nachricht an das Benutzerendgerät (200) sendet und das Benutzerendgerät (200) die Nachricht an das Empfängerendgerät (30) entsprechend den Empfängerinformationen weiterleitet.

5. Navigationssystem (100) nach Anspruch 4,
bei dem, wenn die Nachrichtensendebedingung erfüllt ist, die Steuereinheit (150) automatisch einen Text einer an das Empfängerendgerät (30) weiterzuleitenden Nachricht entsprechend der Empfängerinformationen erzeugt und die Kommunikationsschnittstelleneinheit (120) steuert, um die Nachricht des erzeugten Textes und der Empfängerinformationen an das Benutzerendgerät (200) zu senden.

6. Navigationssystem (100) nach Anspruch 4, bei dem die Steuereinheit (150) eine Ankunftszeit unter Verwendung einer Fahrgeschwindigkeit des Fahrzeugs und eines Weges zu dem Zielort schätzt und bestimmt, ob die Nachrichtensendebedingung erfüllt ist,
wobei die Nachrichtensendebedingung eine geschätzte Zeit ist, die benötigt wird, um an dem Zielort anzukommen.

## Revendications

1. Procédé de navigation d'un système de navigation (100) pour un véhicule, le procédé de navigation comprenant :
lorsqu'une fonction de navigation est sélectionnée, entrée d'informations de destination et de récepteur ;
affichage d'un écran de navigation pour guider un utilisateur vers la destination en utilisant les informations entrées ; et
lorsqu'une condition d'envoi de message prédéterminée est satisfaite pendant un fonctionnement du véhicule vers la destination, affichage d'une interface d'utilisateur, IU, pour recevoir une confirmation d'utilisateur pour une demande d'envoi d'un message,
en réponse à la confirmation d'utilisateur pour un envoi du message entré, envoi du message à transférer à un dispositif terminal récepteur (30) correspondant aux informations de récepteur,
dans lequel un envoi du message à transférer comprend un envoi des informations de récepteur et du message à un dispositif terminal d'utilisateur (200) qui est connecté au système de navigation (100) via une interface, et le dispositif terminal d'utilisateur (200) transférant le message au dispositif terminal récepteur (30) correspondant aux informations de récepteur, et
dans lequel une entrée des informations de destination et de récepteur comprend :
un affichage d'un écran d'arrière-plan comprenant un menu de navigation pour exécuter la fonction de navigation ;
lorsque le menu de navigation est sélectionné, affichage d'un écran d'IU pour recevoir une entrée des informations de destination, une configuration de fonction d'envoi de message, les informations de récepteur, un texte de message et une condition d'envoi de message ; et
un stockage d'entrée d'informations via l'écran d'IU.

2. Le procédé de navigation tel que revendiqué à la revendication 1, dans lequel un envoi du message à transférer comprend en outre :
lorsque la condition d'envoi de message est satisfaite, génération automatique d'un texte d'un message à transférer au dispositif terminal récepteur (30) correspondant aux informations de récepteur ; et
un envoi du message du texte généré et des informations de récepteur au dispositif terminal d'utilisateur (200).

3. Le procédé de navigation tel que revendiqué à la revendication 1, comprenant en outre une estimation d'une heure d'arrivée en utilisant une vitesse de déplacement du véhicule et un trajet vers la destination,
dans lequel la condition d'envoi de message est une durée estimée nécessaire pour arriver à la destination.

4. Système de navigation (100) pour un véhicule, le système de navigation (100) comprenant :
une unité de stockage (110) qui stocke des informations cartographiques ;
une unité de détection d'emplacement (130) qui détecte un emplacement du système de navigation (100) ;
un contrôleur (150) qui recherche un trajet vers une destination en utilisant les informations cartographiques et l'emplacement détecté, et génère un écran de navigation ;
une unité d'affichage (140) qui affiche l'écran de navigation ; et
une unité d'interface de communication (120) via laquelle un message est envoyé,
dans lequel le contrôleur (150) contrôle l'unité d'affichage (140) pour afficher un écran d'IU pour recevoir une entrée des informations de destination, une configuration de fonction d'envoi de message, les informations de récepteur, un texte de message et une condition d'envoi de message,
dans lequel le contrôleur (150) stocke des informations entrées via l'écran d'IU dans l'unité de stockage (110),
dans lequel, lorsqu'une condition d'envoi de message est satisfaite pendant qu'un utilisateur fait fonctionner le véhicule vers la destination, une interface d'utilisateur, IU, pour recevoir une confirmation d'utilisateur pour une demande d'envoi d'un message s'affiche,
en réponse à la confirmation d'utilisateur pour un envoi du message entré, le contrôleur (150) contrôle l'unité d'interface de communication(120) pour envoyer le message à transférer à un dispositif terminal récepteur (30) correspondant aux informations de récepteur pré-entrées,
dans lequel l'unité d'interface de communication (120) est connectée à un dispositif terminal d'utilisateur (200) via une interface,
dans lequel le contrôleur (150) envoie les informations de récepteur et le message au dispositif terminal d'utilisateur (200), et le dispositif terminal d'utilisateur (200) transmet le message au dispositif terminal récepteur (30) correspondant aux informations de récepteur.

5. Le système de navigation (100) tel que revendiqué à la revendication 4,
dans lequel, lorsque la condition d'envoi de message est satisfaite, le contrôleur (150) génère automatiquement un texte d'un message à transférer au dispositif terminal récepteur (30) correspondant aux informations de récepteur et contrôle l'unité d'interface de communication (120) pour envoyer le message du texte généré et les informations de récepteur au dispositif terminal d'utilisateur (200).

6. Le système de navigation (100) tel que revendiqué à la revendication 4, dans lequel le contrôleur (150) estime une heure d'arrivée en utilisant une vitesse de déplacement du véhicule et un trajet vers la destination, et détermine si la condition d'envoi de message est ou non satisfaite,
dans lequel la condition d'envoi de message est une durée estimée nécessaire pour arriver à la destination.
